# EUROPÄISCHE PATENTANMELDUNG

(11) **EP 0 795 739 A2**
(43) Veröffentlichungstag der Anmeldung: **17.09.1997**
(21) Anmeldenummer: 96117225.1
(22) Anmeldetag: 26.10.1996
(51) Int. Cl.: G01F 23/00

(54) **Tankanzeige und Verfahren zur Ermittlung des Restvolumens in einem Tank**

(30) Priorität: 15.03.1996 DE 19610154
(71) Anmelder: VDO Adolf Schindling AG, 60326 Frankfurt/Main (DE)
(72) Erfinder: Wallrafen, Werner, 65719 Hofheim (DE)
(74) Vertreter: Klein, Thomas, Dipl.-Ing. (FH)

(57) **Zusammenfassung**

Eine Tankanzeige für einen mit Kraftstoff (4) gefüllten, in einen Haupttank (27) und Zusatztank (18) aufgeteilten Tank besitzt einen bei fast leerem Haupttank (27) ansprechenden Füllstandsgrenzschalter (21). Gibt dieser ein Signal ab, dann wird ein Ventil (20) geöffnet, wodurch Kraftstoff aus dem Zusatztank (18) in einen Schwalltopf (2) des Haupttanks (27) fließen kann. Weiterhin wird durch dieses Signal eine Einheit (13) zur Erfassung des Kraftstoffverbrauchs aktiviert, welche das durch den Kraftstoffverbrauch abnehmende Restvolumens an Kraftstoff (4) in dein Reservetank (18) berechnet. Als Ausgangsvolumen für die Berechnung dient der vollständig gefüllte Zusatztank (18). Das genaue Restvolumen an Kraftstoff (4) wird angezeigt.

## Beschreibung

Die Erfindung betrifft eine Tankanzeige für einen Kraftstofftank eines Kraftfahrzeuges mit einem den Füllstand an Kraftstoff messenden Sensor und einer diesen Füllstand anzeigenden Tankanzeige, wobei der Kraftstofftank aus einem Haupttank und einem Zusatztank besteht, aus welchem der Kraftstoff bei fast leerem Haupttank in den Haupttank entleerbar ist. Weiterhin betrifft diese Erfindung ein Verfahren zur Ermittlung eines Restvolumens in einem Kraftstofftank, bei dem dieses Volumen bestimmt wird.

Solche Tankanzeigen sind bekannt. Dabei ist der Zusatztank kein eigenständiges Bauteil, vielmehr wird er durch einen Bodenbereich des Haupttankes gebildet, indem der Tank zwei in unterschiedlicher Höhe angeordnete Ablässe aufweist. Jeder Ablaß kann mittels eines als Kraftstoffhahn ausgebildeten und von Hand zu bedienenden Ventils mit einer Kraftstoffleitung verbunden werden. Bei vollem Tank ist der obere Ablaß mit der Kraftstoffleitung zu verbinden. Der Bodenbereich des Tanks ist über den unteren Ablaß mit der Kraftstoffleitung verbindbar. Dieser die Funktion eines Zusatztanks aufweisende Bodenbereich enthält ein Mindestvolumen an Kraftstoff, welches für einen Reservezustand bemessen ist. Häufig ist im Tank ein Sensor angeordnet, bei dem ein Schwimmer auf ein Potentiometer wirkt, wodurch das Anzeigefeld ein Signal erhält und den im Tank befindlichen Füllstand des Kraftstoffs anzeigt. Zusätzlich wird bei Erreichen des Mindestvolumens an einen Fahrer ein optisches Signal, beispielsweise mit einer Lampe auf dem Anzeigefeld, gegeben. Dieses optische Signal dient der Erkennung des Reservezustandes. Der Fahrer kann also durch die Anzeige für den Füllstand und die Lampe für den Reservezustand abschätzen, wieviel Kraftstoff er zur Verfügung hat. Bei heutigen Kraftfahrzeugen ist die Anzeige jedoch sehr ungenau, da der Tank immer flacher und verwinkelter gestaltet ist und damit eine Messung der Füllhöhe naturgemäß zu großen Ungenauigkeiten führt. Damit ist dieses Abschätzen auch mit großer Übung des Fahrers sehr unzulänglich und führt gerade im Reservezustand zu großer Unsicherheit über die Menge des noch zur Verfügung stehenden Kraftstoffs.

Der Erfindung liegt das Problem zugrunde, eine Tankanzeige der eingangs genannten Art so zu gestalten, daß bei Erreichen des Reservezustands bei beliebigen Fahrzuständen eine Mindestkraftstoffmenge selbständig und zuverlässig zur Verfügung steht und diese zur Anzeige bringt. Weiterhin soll ein Verfahren zur Ermittlung des genauen Restvolumens entwickelt werden.

Das erstgenannte Problem wird erfindungsgemäß dadurch gelöst, daß von dem Sensor bei Erreichen eines bestimmten geringen Füllstandes im Haupttank ein Signal erzeugbar ist, durch das der Entleervorgang des Zusatztanks auslösbar sowie eine Warneinrichtung ansteuerbar ist. Dabei kann die Warneinrichtung ein optische oder akustische Warneinrichtung sein.

Durch diese Gestaltung steht bei fast leerem Haupttank das definierte Mindestvolumen des Zusatztanks zur Verfügung. Da der Zusatztank beim Tanken bevorzugt befüllt wird, ist sichergestellt, daß er stets voll ist, so daß bei Erreichen des Reservezustands sein Volumen vollständig zur Verfügung steht. Die Entnahme des Kraftstoffs aus dem Zusatztank sollte bereits dann erfolgen, wenn noch eine Restmenge Kraftstoff im Haupttank ist, daß heißt, wenn dieser nur fast leer ist. Anderenfalls würde eine Unterbrechung der Kraftstoffversorgung bei heutigen Kraftfahrzeugen zu Schäden an einem Katalysator führen. Hiervon abgesehen könnte es zu einer Verkehrsbehinderung oder gar Gefährdung kommen, wenn bei Erreichen des Reservezustandes die Vortriebskraft des Kraftfahrzeugs kurzfristig aussetzen würde.

Da sich der Fahrer bei der erfindungsgemäßen Tankanzeige darauf verlassen kann, daß im Reservebereich zumindest das angezeigte Volumen an Kraftstoff auch vorhanden ist, braucht ein separater Reservekanister nicht mehr mitgeführt zu werden. Die Tankanzeige kann dadurch zu einer erhöhten Sicherheit bei einem Unfall und zu einer Verringerung von Kraftstoffemissionen beitragen. Weiterhin wird durch die Erfindung Platz und Gewicht im Kofferraum gespart.

Eine vorteilhafte Weiterbildung der erfindungsgemäßen Tankanzeige besteht darin, daß durch das Signal des Sensors der Start einer Berechnung des jeweiligen Restvolumens an Kraftstoff aufgrund von Kraftstoffverbrauchswerten aus einer Einheit zur Erfassung des Kraftstoffverbrauchs auslösbar ist. Hierdurch ist das jeweilige, durch den Kraftstoffverbrauch abnehmende Restvolumen an Kraftstoff im Tank wesentlich genauer zu ermitteln als mit Hilfe eines Niveausensors.

Heutige Kraftfahrzeuge besitzen häufig im Kraftstofftank einen Schwalltopf. Dieser Schwalltopf dient der Sicherheit der Kraftstoffversorgung auch bei Kurvenfahrt oder beim Bremsen, da er Schwappbewegungen des Kraftstoffs im Bereich des Auslasses des Tanks unterdrückt. Dann ist es für die Genauigkeit der Tankanzeige besonders vorteilhaft, wenn der Sensor ein den Füllstand im Kraftstofftank messender Füllstandssensor und/oder ein in einem Schwalltopf des Haupttanks angeordneter Füllstandsgrenzschalter ist. Der Füllstandsgrenzschalter ist damit an der Position angeordnet, die für eine ausreichende Kraftstoffversorgung des Motors maßgeblich ist. Ein solcher Füllstandsgrenzschalter eignet sich für diese Weiterbildung der Erfindung besonders gut, da er genau auf einen Schaltpunkt einstellbar ist.

Der Kraftstoffverbrauch kann beispielsweise über die Durchflußmenge ermittelt werden. Die Tankanzeige ist bei heutigen Kraftfahrzeugen im Reservebereich jedoch genauer, wenn gemäß einer vorteilhaften Weiterbildung der Erfindung die Einheit zur Erfassung des Kraftstoffverbrauchs zur Auswertung von Einspritzimpulsen einer Motorsteuerelektronik ausgebildet ist. Bei Dieselfahrzeugen läßt sich der Kraftstoffverbrauch auch über einen Regelstangenweg ermitteln.

Oftmals haben die Tankanzeigen nur ein analoges Anzeigefeld mit einem sehr kleinen Bereich für den Reservebereich. Die Ablesegenauigkeit im Reservebereich wird wesentlich gesteigert, wenn gemäß einer Weiterbildung der Erfindung die Tankanzeige ein erstes Anzeigefeld für den gesamten Bereich des Füllstandes des Kraftstoffs und ein bei leerem Haupttank einschaltendes zweites Anzeigefeld hat.

Der Entleervorgang des Zusatztanks kann mittels eines Ventils erfolgen, über das der Zusatztank mit einer zu einer Ansaugseite der Kraftstoffpumpe führenden Leitung verbindbar ist. Der Kraftstoff des Zusatztanks fließt dann bei Erreichen des Reservezustandes statt aus dem Haupttank unmittelbar aus dem Zusatztank zur Kraftstoffpumpe. In diesem Fall wäre es nicht mehr erforderlich, den Zusatztank über dem Haupttank anzuordnen oder ihn mit einer separaten Kraftstoffpumpe zu versehen.

Wenn der Zusatztank sich oberhalb des Bodens des Haupttanks befindet, dann ist es vorteilhaft, wenn der Entleervorgang des Zusatztanks mittels eines Ventils erfolgt, über das der Zusatztank mit dem Haupttank verbindbar ist. Bei einer solchen Gestaltung entleert sich der Zusatztank bei Erreichen des Reservezustandes in den Haupttank oder in den Schwalltopf, so daß die Kraftstoffpumpe hinreichend Kraftstoff ansaugen kann.

Die Füllung des Zusatztanks gestaltet sich konstruktiv besonders einfach, wenn der Zusatztank über den Tankstutzen des Haupttanks befüllbar ist. Bei Überlauf des Zusatztanks wird dann der Haupttank befüllt.

Eine besonders einfache Form des Zusatztanks ergibt sich, wenn der Zusatztank durch eine gegenüber dem Haupttank im Querschnitt wesentlich verringerte Ausformung im Boden des Haupttanks gebildet ist. In einem solchen Fall ist die erfindungsgemäße Tankanzeige mit besonders geringem Aufwand zu realisieren.

Um dem Fahrer zusätzliche Hinweise über den Reservebereich zur Verfügung zu stellen, ist es von Vorteil, wenn das zweite Anzeigefeld eine digitale Klarschriftanzeige aufweist. Damit kann der Fahrer beispielsweise mit der Anzeige "Zusatztank eingeschaltet" und gegebenenfalls einem Warnton darüber informiert werden, daß von nun an das Reservevolumen verbraucht wird und die Verbrauchsmessung und damit eine Reservemengenanzeige erfolgt.

Der Sicherstellung einer ständigen Füllung des Zusatztanks dient es, wenn der Zusatztank ein bei gefülltem Zusatztank selbsttätig schließendes Überlaufventil hat. Das Überlaufventil verhindert dann ein Herausschwappen von Kraftstoff aus dem Zusatztank.

Alternativ kann das Herausschwappen des Kraftstoffs aus dem Zusatztank auch dadurch unterbunden werden, daß im Zusatztank Schwallwände vorhanden sind. Schwallwände haben im Vergleich zu einem Ventil den Vorteil, keine beweglichen Teile zu besitzen.

Zur Kontrolle der Funktionsfähigkeit der Tankanzeige ist von Vorteil, wenn im unteren Bereich und/oder im oberen Bereich des Zusatztanks ein Füllstandsgrenzschalter angeordnet ist. Im Falle eines Nachtankens einer geringen Menge Kraftstoff kann durch den unteren Füllgrenzschalter z.B. die Tankanzeige den Zustand, der zu einer nicht korrekten Anzeige führen könnte, erkennen und das Anzeigefeld abschalten oder als Warnung blinken lassen.

Ist ein oberer Füllgrenzschalter vorhanden, kann beispielsweise bei einem den Zusatztank vollständig füllenden Nachtanken die gültige Anzeige immer sichergestellt sein.

Ein zusätzlicher, die Sicherheit der genauen Anzeige des Anzeigefeldes garantierender Vorteil ergibt sich, wenn im Zusatztank ein den Füllstand kontinuierlich messender Füllstandssensor angeordnet ist. Im Falle des Nachtankens einer geringen, den Zusatztank nicht füllenden Nachtankmenge während des Reservebereichs kann diese Nachtankmenge erfaßt und zu der berechneten Restmenge hinzuaddiert werden.

Das zweitgenannte Problem, nämlich ein Verfahren zur Ermittlung des Restvolumens zu entwickeln, wird erfindungsgemäß dadurch gelöst, daß bei fast leerem Haupttank die weitere Entnahme des Kraftstoffs aus dem Zusatztank erfolgt und das verbliebene Restvolumen mit Hilfe der Verbrauchswerte bestimmt wird.

Damit läßt sich das Restvolumen sehr einfach und genau ermitteln. Die Ermittlung der Verbrauchswerte ist bei heutigen Kraftfahrzeugen mit Einspritzanlagen recht einfach und genau durch die Messung der Einspritzimpulse zu realisieren. Für eine Berechnung des Restvolumens wird dazu lediglich ein fester Ausgangspunkt, ein fest definiertes Volumen im gefüllten Zusatztank, benötigt. Damit kann eine genaue Anzeige für den Reservebereich zusätzlich zu einer konventionellen Anzeige für den übrigen Bereich eingesetzt werden. Gleichzeitig muß bei fast leerem Haupttank kein Reservekanister mehr manuell in den Tank umgefüllt werden.

Eventuelle Ungenauigkeiten in der gesamten Tankanzeige des Haupttanks lassen sich zusätzlich dadurch beheben, daß die Kennlinie des den Füllstand im Haupttank messenden Füllstandssensors automatisch bei Öffnung des Ventils bzw. dem Ansprechen des die Verbrauchsmessung startenden Füllstandsgrenzschalters an das Restvolumen angepaßt wird. Dies kann durch eine Nullpunktjustierung automatisch erfolgen.

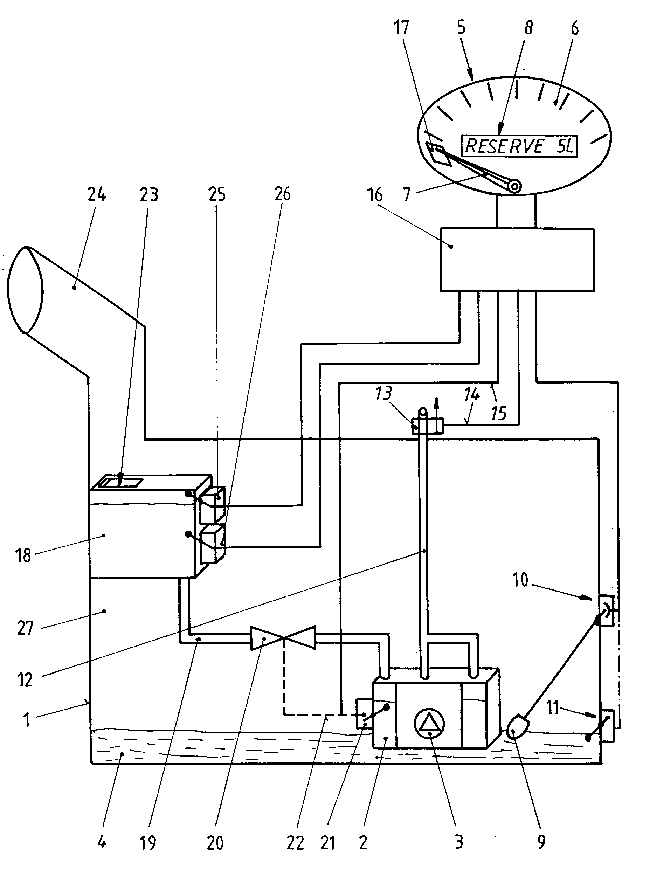

Die Erfindung läßt zahlreiche Ausführungsformen zu. Zur weiteren Verdeutlichung ihres Grundprinzips ist in der Zeichnung schematisch ein Querschnitt durch einen erfindungsgemäßen Tank dargestellt und wird nachfolgend beschrieben.

Die Zeichnung zeigt einen Kraftstofftank 1, der aus einem Haupttank 27 und einem in diesem angeordneten Zusatztank 18 besteht. In dem Haupttank 27 ist ein von Kraftstoff 4 umgebener Schwalltopf 2 mit einer Kraftstoffpumpe 3 angeordnet. Ein analoges Anzeigefeld 5 mit einer Skala 6 und einem Zeiger 7 und ein digitales Anzeigefeld 8 bilden zusammen eine Tankanzeige. In dem Kraftstofftank 1 sind zur Messung des gesamten Füllstandsbereiches ein Füllstandssensor 10 mit einem Schwimmer 9 angeordnet.

Am Schwalltopf 2 befindet sich ein Füllstandsgrenzschalter 21, welcher ein Ventil 20 in einer Leitung 19 zu steuern vermag. Diese Leitung 19 führt vom Zusatztank 18 zum Schwalltopf 2 und damit in den Haupttank 27. Wenn der Füllstandsgrenzschalter 21 einen zu niedrigen Stand an Kraftstoff 4 feststellt, wird das Ventil 20 über eine Signalleitung 22 geöffnet. Dadurch fließt Kraftstoff 4 aus dem Zusatztank 18 in den Haupttank 27. Gleichzeitig beginnt die Berechnung des Restvolumens aus den Werten des Kraftstoffverbrauchs. Damit kein Kraftstoff oben aus dem Zusatztank 18 schwappt, ist an seiner Oberseite ein Membranventil 23 befestigt.

Das Signal zum Öffnen des Ventils 20 könnte statt von dem Füllstandsgrenzschalter 21 auch von dem Füllstandssensor 10 oder von einem Füllstandsgrenzschalter 11 erzeugt werden, der in einer minimalen Höhe des Haupttanks 27 angeordnet ist.

Der Vergleich des analogen Anzeigefeldes 5 mit dem digitalen Anzeigefeld 8 Zeigt, daß das digitale Anzeigefeld 8 bei geringen Füllhöhen einen genauen Wert anzeigt, während der Zeiger 7 des analogen Anzeigefeldes 5 dann in einem Reservebereich 17 der Skala 6 steht.

Der Zusatztank 18 ist direkt unter einem Tankstutzen 24 angeordnet. Damit ist sichergestellt, daß der Zusatztank 18 bei jedem Tankvorgang zuerst gefüllt wird und Kraftstoff 4 erst nach einem Überlaufen des Zusatztanks 18 in den Haupttank 27 gelangt.

Zur Feststellung, ob der Zusatztank 18 ausreichend gefüllt oder vollständig leer ist, besitzt er in seinem oberen Bereich einen Füllstandsgrenzschalter 25 und in seinem unteren Bereich ebenfalls einen Füllstandsgrenzschalter 26.

## Patentansprüche

1. Tankanzeige für einen Kraftstofftank eines Kraftfahrzeuges mit einem einen Füllstand an Kraftstoff messenden Sensor und einer diesen Füllstand anzeigenden Tankanzeige, wobei der Kraftstofftank aus einem Haupttank und einem Zusatztank besteht, aus welchem der Kraftstoff bei fast leerem Haupttank in den Haupttank entleerbar ist, **dadurch gekennzeichnet**, daß von dem Sensor (10, 11, 21) bei Erreichen eines bestimmten geringen Füllstandes im Haupttank (27) ein Signal erzeugbar ist, durch das der Entleervorgang des Zusatztanks (18) auslösbar sowie eine Warneinrichtung ansteuerbar ist.

2. Tankanzeige nach Anspruch 1, **dadurch gekennzeichnet**, daß durch das Signal des Sensors (10, 11, 21) der Start einer Berechnung des jeweiligen Restvolumens an Kraftstoff (4) aufgrund von Kraftstoffverbrauchswerten aus einer Einheit (13) zur Erfassung des Kraftstoffverbrauchs auslösbar ist.

3. Tankanzeige nach den Ansprüchen 1 oder 2, **dadurch gekennzeichnet**, daß der Sensor ein den Füllstand im Kraftstofftank (1) messender Füllstandssensor (10) und/oder ein in einem Schwalltopf des Haupttanks (27) angeordneter Füllstandsgrenzschalter (11, 21) ist.

4. Tankanzeige nach zumindest einem der vorangehenden Ansprüche, **dadurch gekennzeichnet**, daß die Einheit (13) zur Erfassung des Kraftstoffverbrauchs zur Auswertung von Einspritzimpulsen einer Motorsteuerelektronik ausgebildet ist.

5. Tankanzeige nach zumindest einem der vorangehenden Ansprüche, **dadurch gekennzeichnet**, daß die Tankanzeige ein erstes Anzeigefeld (5) für den gesamten Bereich des Füllstandes des Kraftstoffs (4) und ein bei leerem Haupttank (27) einschaltendes zweites Anzeigefeld (8) hat.

6. Tankanzeige nach zumindest einem der vorangehenden Ansprüche, **dadurch gekennzeichnet**, daß der Entleervorgang des Zusatztanks (18) mittels eines Ventils (20) erfolgt, über das der Zusatztank (18) mit einer zu einer Ansaugseite einer Kraftstoffpumpe (3) führenden Leitung verbindbar ist.

7. Tankanzeige nach zumindest einem der Ansprüche 1 bis 5, **dadurch gekennzeichnet**, daß der Entleervorgang des Zusatztanks (18) mittels eines Ventils (20) erfolgt, über das der Zusatztank (18) mit dem Haupttank (27) verbindbar ist.

8. Tankanzeige nach zumindest einem der vorangehenden Ansprüche, **dadurch gekennzeichnet**, daß der Zusatztank (18) über den Tankstutzen (24) des Haupttanks (27) befüllbar ist.

9. Tankanzeige nach zumindest einem der vorangehenden Ansprüche, **dadurch gekennzeichnet**, daß der Zusatztank (18) durch eine gegenüber dem Haupttank (27) im Querschnitt wesentlich verringerte Ausformung im Boden des Haupttankes (27) gebildet ist.

10. Tankanzeige nach zumindest einem der vorangehenden Ansprüche, **dadurch gekennzeichnet**, daß das zweite Anzeigefeld (5, 8) eine digitale Klarschriftanzeige aufweist.

11. Tankanzeige nach zumindest einem der vorangehenden Ansprüche, **dadurch gekennzeichnet**, daß der Zusatztank (18) ein bei gefülltem Zusatztank selbsttätig schließendes Überlaufventil (23) besitzt.

12. Tankanzeige nach zumindest einem der vorangehenden Ansprüche, **dadurch gekennzeichnet**, daß im Zusatztank (18) Schwallwände vorhanden sind.

13. Tankanzeige nach zumindest einem der vorangehenden Ansprüche, **dadurch gekennzeichnet**, daß im unteren Bereich und/oder im oberen Bereich des Zusatztanks (18) ein Füllstandsgrenzschalter (26, 25) angeordnet ist.

14. Tankanzeige nach zumindest einem der vorangehenden Ansprüche, **dadurch gekennzeichnet**, daß im Zusatztank (18) ein den Füllstand kontinuierlich messender Füllstandssensor angeordnet ist.

15. Verfahren zur Ermittlung eines Restvolumens in einem Kraftstofftank, welcher einen den Füllstand an Kraftstoff messenden Sensor hat und der aus einem Haupttank und einem Zusatztank besteht, aus welchem der Kraftstoff bei fast leerem Haupttank über ein Ventil entleerbar ist, **dadurch gekennzeichnet**, daß beim Betanken bevorzugt zunächst immer der Zusatztank gefüllt wird und daß aufgrund eines Signals eines Sensors bei fast leerem Haupttank das Ventil zur Entnahme von Kraftstoff aus dem Zusatztank umgeschaltet wird.

16. Verfahren nach Anspruch 15, **dadurch gekennzeichnet**, daß nach dem Umschalten auf den Zusatztank das verbliebene Restvolumen im Zusatztank mit Hilfe von Verbrauchswerten des Verbrennungsmotors des Kraftfahrzeugs bestimmt wird.

17. Verfahren nach Anspruch 16, **dadurch gekennzeichnet**, daß eine Kennlinie eines den Füllstand im Haupttank messenden Füllstandssensors automatisch bei Öffnung des Ventils bzw. dem Ansprechen des die Verbrauchsmessung startenden Füllstandsgrenzschalters an das Restvolumen angepaßt wird.
